# EUROPÄISCHE PATENTSCHRIFT

(11) **EP 1 149 670 B1**
(45) Veröffentlichungstag und Bekanntmachung des Hinweises auf die Patenterteilung: **08.03.2006**
(21) Anmeldenummer: 00128357.1
(22) Anmeldetag: 22.12.2000
(51) Int. Cl.: B27K 3/50

(54) **Biologische Holzschutz-Lösung auf der Basis von Kräuterauszügen**
Biological wood treatment solution based on extracts of herbs
Solution de traitement biologique du bois à base d'extraits d'herbes

(30) Priorität: 28.04.2000 DE 10020957
(43) Veröffentlichungstag der Anmeldung: 31.10.2001
(73) Patentinhaber: Jobeck GmbH, 83734 Hausham (DE)
(72) Erfinder: Becker, Josef, 83734 Hausham (DE)
(74) Vertreter: Schirdewahn, Jürgen

(56) Entgegenhaltungen:
- EP-A- 0 945 066
- WO-A-98/02044
- CA-A- 1 168 578
- DE-A- 19 700 969
- DATABASE CHEMABS [Online] CHEMICAL ABSTRACTS SERVICE, COLUMBUS, OHIO, US; HILL, ROBERT A. ET AL: "Use of natural products in sapstain control" retrieved from STN Database accession no. 128:111831 CA XP002171701 & FRI BULL. (1997), 204(STRATEGIES FOR IMPROVING PROTECTION OF LOGS AND LUMBER), 39-42 , 1997,
- DATABASE CHEMABS [Online] CHEMICAL ABSTRACTS SERVICE, COLUMBUS, OHIO, US; FITZGERALD, M. G. ET AL: "Some chemical and microbial aspects of decay resistance of Huon pine (Lagarostrobos franklinii (Hook. f.), C.J. Quinn)" retrieved from STN Database accession no. 114:26001 CA XP002171702 & HOLZFORSCHUNG (1990), 44(5), 335-8 , 1990,

## Beschreibung

Im Rahmen des gesteigerten Umweltbewußtseins und einer bewusst ökologischen Lebensweise werden in vermehrtem Umfang Häuser, Möbel und Gegenstände des täglichen Bedarfs aus Holz hergestellt und damit stellt sich das Problem eines wirksamen und ökologischen Holzschutzes, insbesondere gegenüber Insekten- und Wurmbefall, z.B. durch Scheinbockkäfer.

Übliche Holzschutzmittel wurden entweder auf der Grundlage von Metallsalzkombinationen, z.B. Chromat-Kupfersalz-Gemische, oder auf der Basis von Teerölen aufgebaut. Eine andere Gruppe der bisher eingesetzten Holzschutzmittel bilden die lösungsmittelhaltigen Präparate, welche z.B. insektizide Wirkstoffe, wie γ-Hexachlorcyclohexan (Lindan), organische Phosphorsäureester und/oder bestimmte Carbamide und Pyrethroide, enthalten.

Alle diese bekannten Holzschutzmittel erfüllen jedoch nicht die Bedingung, auf biologischer Basis aufgebaut zu sein und sie sind daher nicht geeignet für ein ökologisches Umweltsystem, das die natürlichen Eigenschaften von Naturholz weitgehend unverändert läßt.

Aufgabe der Erfindung war es daher, eine biologische Holzschutz-Lösung zur Verfügung zu stellen, welche eine hohe Eindringfähigkeit bei gleichzeitiger Nachhaltigkeit ihrer Wirkung (Tiefenwirkung) und eine gute Konservierungsaktivität aufweist.

Diese Ziele werden erfindungsgemäß realisiert durch eine Holzschutz-Lösung auf der Basis von Kräuterauszügen, welche die folgenden Wirkstoffe enthält:
- a): 38 bis 50 Vol% eines oder mehrerer Lösungsvermittler,
- b): 30 bis 55 Vol% eines oder mehrerer Trägerstoffe(s),
- c): 2 bis 8 Vol% eines Fichtennadel- und/oder Kiefernnadelöls und/oder Terpentinöls,
- d): 0,5 bis 4 Vol% Thymianöl,
- e): 0,5 bis 3 Vol% Methylsalicylat,
- f): 0,5 bis 3 Vol% Eugenol,
- g): 0,5 bis 4 Vol% Neemöl,
- h): 0,5 bis 4 Vol% Filicisöl.

Gemäss einer bevorzugten Ausführungsform enthält die Lösung die betreffenden Inhaltsstoffe in den nachstehenden Konzentrationen:
- a): 40 bis 48 Vol%, insbesondere 42 Vol%, an Lösungsvermittler,
- b): 40 bis 50 Vol%, insbesondere 49 Vol%, an Trägerstoff,
- c): 3 bis 6 Vol%, insbesondere 4 Vol%, an Fichtennadel- und/oder Kiefernnadelöl und/oder Terpentinöl,
- d): 1 bis 3 Vol%, insbesondere 1,5 Vol%, Thymianöl,
- e): 0,7 bis 2 Vol%, insbesondere 1 Vol%, Methylsalicylat,
- f): 0,7 bis 2 Vol%, insbesondere 1 Vol%, Eugenol,
- g): 0,7 bis 3 Vol%, insbesondere 2 Vol%, Neemöl,
- h): 0,7 bis 3 Vol%, insbesondere 2 Vol%, Filicisöl.

Als Lösungsvermittler wird zweckmäßig Ethylacetat verwendet.

Als Trägerstoffe eignen sich z.B. Paraffinöl, Kolophonium und/oder Leinöl.

Sehr zweckmäßig enthält die Lösung als Trägerstoff 30 bis 40 Vol%, vorzugsweise 32 bis 38 Vol% und insbesondere 34 Vol% Paraffinöl.

Besonders günstig ist eine Ausführungsform, gemäß welcher die Lösung als Trägerstoff 4 bis 12 Vol%, vorzugsweise 6 bis 10 Vol% und insbesondere 8 Vol% Kolophonium und/oder 7 Vol% Leinöl enthält.

Als Kolophonium kommen für die erfindungsgemäßen Zwecke alle im Handel erhältlichen Typen in Betracht, wie Balsamharz, Wurzelharz und sogenanntes Tallharz.

Bei der Komponente c) in Form von Fichtennadel- und Kiefernnadelöl handelt es sich um Naturprodukte, die aus den verschiedenen Pinaceen-Arten gewonnen werden. Von besonders guter Qualität ist sibirisches Fichtennadelöl.

Als Terpentinöle kommen in Betracht die aus dem Balsam lebender Kiefernbäume oder aus dem Holz bzw. den Wurzeln solcher Bäume gewonnen werden. Auch sogenanntes Sulfatterpentinöl kann verwendet werden.

Thymianöl wird üblicherweise durch Destillation aus dem frischen blühenden Kraut erhalten, vor allem in Südfrankreich.

Eugenol (4-Allyl-2-methoxyphenol) wird im allgemeinen durch Ausschütteln von Nelkenöl mit Kalilauge (5prozentig) erhalten.

Das indische Neemöl (auch als "Veepa oil" bekannt) wird aus den Samen von Melia azadirachta isoliert.

Filicisöl wird durch Extraktion von Farnwurzeln erhalten.

Für die Herstellung der Holzschutz-Lösung werden die einzelnen Bestandteile und Extrakte miteinander vermischt. Man trägt die fertige Lösung zweckmässig mit einem Pinsel auf das zu schützende trockene Holz, wie z.B. Balken, Bretter und Bootsrümpfe aus Holz, auf, wobei diese sofort und ohne Rückstände vom Holz aufgenommen wird. Da die Lösung farblos ist, macht eine anschließende Veredelungsbehandlung mit Lacken und Firnissen keinerlei Schwierigkeiten.

Die Wirkstoffe der Kräuter vertreiben den Holzwurm und andere Insekten bzw. Käfer infolge ihrer Tiefenwirkung aus dem befallenen Holz und verhindern einen erneuten Befall durch die Schädlinge. Die Inhaltsstoffe der Kräuter üben dabei eine synergistische Wirkung aus.

Die Erfindung wird durch die nachstehenden Ausführungsbeispiele näher erläutert.

### Beispiel 1

| | |
|---|---|
| a) Ethylacetat | 40,0 Vol% |
| b) Paraffinöl | 33,5 " |
| Kolophonium | 8,0 " |
| Leinöl | 7,0 " |
| c) Fichtennadelöl | 4,0 " |
| d) Thymianöl | 1,5 " |
| e) Methylsalicylat | 1,0 " |
| f) Eugenol | 1, 0 " |
| g) Neemöl | 2,0 " |
| h) Filicisöl | 2,0 " |
| | 100 Vol% |

### Beispiel 2

| | |
|---|---|
| a) Ethylacetat | 38,0 Vol% |
| b) Paraffinöl | 32,0 Vol% |
| Kolophonium | 6,0 Vol% |
| Leinöl | 8,0 Vol% |
| c) Kiefernnadelöl | 4,5 Vol% |
| d) Thymianöl | 2,0 Vol% |
| e) Methylsalicylat | 1,5 Vol% |
| f) Eugenol | 1,0 Vol% |
| g) Neemöl | 4,0 Vol% |
| h) Filicisöl | 3,0 Vol% |
| | 100,0 Vol% |

## Patentansprüche

1. Biologische Holzschutz-Lösung auf der Basis von Kräuterauszügen, **gekennzeichnet durch** folgendeInhaltsstoffe:
a) 38 bis 50 Vol% eines oder mehrerer Lösungsvermittler,
b) 30 bis 55 Vol% eines oder mehrerer Trägerstoffe(s),
c) 2 bis 8 Vol% eines Fichtennadel- und/oder Kiefernnadelöls und/oder Terpentinöls,
d) 0,5 bis 4 Vol% Thymianöl,
e) 0,5 bis 3 Vol% Methylsalicylat,
f) 0,5 bis 3 Vol% Eugenol,
g) 0,5 bis 4 Vol% Neemöl,
h) 0,5 bis 4 Vol% Filicisöl.

2. Biologische Holzschutz-Lösung nach Anspruch 1, **gekennzeichnet durch** den Gehalt an
a) 40 bis 48 Vol%, insbesondere 42 Vol%, an Lösungsvermittler,
b) 40 bis 50 Vol%, insbesondere 49 Vol%, an Trägerstoff,
c) 3 bis 6 Vol%, insbesondere 4 Vol%, an Fichtennadel- und/oder Kiefernnadelöl und/oder Terpentinöl,
d) 1 bis 3 Vol%, insbesondere 1,5 Vol%, Thymianöl,
e) 0,7 bis 2 Vol%, insbesondere 1 Vol%, Methylsalicylat,
f) 0,7 bis 2 Vol%, insbesondere 1 Vol%, Eugenol,
g) 0,7 bis 3 Vol%, insbesondere 2 Vol%, Neemöl,
h) 0,7 bis 3 Vol%, insbesondere 2 Vol%, Filicisöl.

3. Biologische Holzschutz-Lösung nach Anspruch 1 und 2, **dadurch gekennzeichnet, daß** sie als Lösungsvermittler Ethylacetat enthält.

4. Biologische Holzschutz-Lösung nach Anspruch 1 bis 3, **dadurch gekennzeichnet, daß** sie als Trägerstoff Paraffinöl und/oder Kolophonium und/oder Leinöl enthält.

5. Biologische Holzschutz-Lösung nach Anspruch 4, **dadurch gekennzeichnet, daß** sie als Trägerstoff 30 bis 40 Vol%, vorzugsweise 32 bis 38 Vol% und insbesondere 34 Vol% Paraffinöl enthält.

6. Biologische Holzschutz-Lösung nach Anspruch 4 und 5, **dadurch gekennzeichnet, daß** sie als Trägerstoff 4 bis 12 Vol%, vorzugsweise 6 bis 10 Vol% und insbesondere 8 Vol% Kolophonium enthält.

7. Biologische Holzschutz-Lösung nach Anspruch 4 bis 6, **dadurch gekennzeichnet, daß** sie als Trägerstoff 4 bis 12 Vol%, vorzugsweise 6 bis 10 Vol% und insbesondere 7 Vol% Leinöl enthält.

## Claims

1. A biological wood preservative solution based on herb extracts, **characterised by** the following constituents:
a) 38 to 50% by volume of one or more solvents,
b) 30 to 55% by weight of one or more carriers,
c) 2 to 8% by volume of a spruce needle and/or pine needle oil and/or turpentine oil,
d) 0.5 to 4% by volume of thyme oil,
e) 0.5 to 3% by volume of methyl salicylate,
f) 0.5 to 3% by volume of eugenol,
g) 0.5 to 4% by volume of neem oil, and
h) 0.5 to 4% by volume of fern oil.

2. A biological wood preservative solution according to claim 1 **characterised by** the content of
a) 40 to 48% by volume, in particular 42% by volume, of solvent,
b) 40 to 50% by volume, in particular 49% by volume, of carrier,
c) 3 to 6% by volume, in particular 4% by volume, of spruce needle and/or pine needle oil and/or turpentine oil,
d) 1 to 3% by volume, in particular 1.5% by volume, of thyme oil,
e) 0.7 to 2% by volume, in particular 1% by volume, of methyl salicylate,
f) 0.7 to 2% by volume, in particular 1% by volume, of eugenol,
g) 0.7 to 3% by volume, in particular 2% by volume, of neem oil, and
h) 0.7 to 3% by volume, in particular 2% by volume, of fern oil.

3. A biological wood preservative solution according to claim 1 and claim 2 **characterised in that** it contains ethyl acetate as solvent.

4. A biological wood preservative solution according to claims 1 to 3 **characterised in that** it contains paraffin oil and/or rosin and/or flax oil as carrier.

5. A biological wood preservative solution according to claim 4 **characterised in that** as the carrier it contains 30 to 40% by volume, preferably 32 to 38% by volume and in particular 34% by volume of paraffin oil.

6. A biological wood preservative solution according to claim 4 and claim 5 **characterised in that** as the carrier it contains 4 to 12% by volume, preferably 6 to 10% by volume and in particular 8% by volume of rosin.

7. A biological wood preservative solution according to claims 4 to 6 **characterised in that** as the carrier it contains 4 to 12% by volume, preferably 6 to 10% by volume and in particular 7% by volume of flax oil.

## Revendications

1. Solution de traitement protecteur biologique du bois, à base d'extraits d'herbes, **caractérisée par** les composants suivants :
a) 38 à 50 % en volume d'un ou plusieurs agents de solubilisation,
b) 30 à 55 % en poids en volume d'une ou plusieurs matériau(x) de base,
c) 2 à 8 % en volume d'une huile d'aiguilles d'épicéa et/ou de pin et/ou d'huile de térébenthine,
d) 0,5 à 4 % en volume d'huile de thym,
e) 0,5 à 3 % en volume de méthyl salicylate,
f) 0,5 à 3 % en volume d'eugénol,
g) 0,5 à 4 % en volume d'huile de neem,
h) 0,5 à 4 % en volume d'huile de filicis.

2. Solution de traitement protecteur biologique du bois selon la revendication 1, **caractérisée par** la teneur en
a) 40 à 48 % en volume, en particulier 42 % en volume, d'agents de solubilisation,
b) 40 à 50 % en poids en volume, en particulier 49 % en volume de matériau de base,
c) 3 à 6 % en volume, en particulier 4 % en volume, d'une huile d'aiguilles d'épicéa et/ou de pin et/ou d'huile de térébenthine,
d) 1 à 3 % en volume, en particulier 1,5 % en volume, d'huile de thym
e) 0,7 à 2 % en volume, en particulier 1 % en volume de méthyl salicylate,
f) 0,7 à 2 % en volume, en particulier 1 % en volume d'eugénol,
g) 0,7 à 3 % en volume, en particulier 2 % en volume d'huile de neem,
h) 0,7 à 3 % en volume, en particulier 2 % en volume d'huile de filicis.

3. Solution de traitement protecteur biologique du bois selon les revendications 1 et 2, **caractérisée en ce qu'**elle contient de l'éthyl acétate en tant qu'agent dissolvant.

4. Solution de traitement protecteur biologique du bois selon les revendications 1 à 3, **caractérisée en ce qu'**elle contient en tant que substance support de l'huile de paraffine et/ou du colophane et/ou de l'huile de lin.

5. Solution de traitement protecteur biologique du bois selon la revendication 4, **caractérisée en ce qu'**elle contient en tant que substance support de 30 à 40 % en volume, de préférence de 32 à 38 % en volume et, en particulier, de 34 % en volume d'huile de paraffine.

6. Solution de traitement protecteur biologique du bois selon les revendications 4 et 5, **caractérisée en ce qu'**elle contient comme substance support de 4 à 12 % en volume, de préférence de 6 à 10 % en volume et, en particulier, de 8 % en volume d'huile de colophane.

7. Solution de traitement protecteur biologique du bois selon les revendications 4 à 6, **caractérisée en ce qu'**elle contient en tant que substance support de 4 à 12 % en volume, de préférence de 6 à 10 % en volume et, en particulier, de 7 % en volume d'huile de lin.
